# EUROPEAN PATENT APPLICATION

(11) **EP 1 679 858 A1**
(43) Date of publication of application: **12.07.2006**
(21) Application number: 04817422.1
(22) Date of filing: 29.10.2004
(51) Int. Cl.: H04M 1/02

(54) **CONNECTION DEVICE, ELECTRONIC APPARATUS WITH THE SAME, AND FOLDING PORTABLE TERMINAL DEVICE**

(30) Priority: 31.10.2003 JP 2003371759; 28.04.2004 JP 2004132920; 16.08.2004 JP 2004236670
(71) Applicant: MATSUSHITA ELECTRIC INDUSTRIAL CO., LTD., Kadoma-shi, Osaka 571-8501 (JP)
(72) Inventor: SATO, Noriyoshi c/o Matsushita El. Ind.Co.Ltd., Chuo-ku, Osaka 540-6319 (JP); MIYAMATSU, Yuki c/o Matsushita El.Ind.Co.Ltd., Chuo-ku, Osaka 540-6319 (JP); YUGE, Hiroko c/o Matsushita El.Ind.Co.Ltd., Chuo-ku, Osaka 540-6319 (JP); NAKAMURA, Asami c/o Matsushita El.Ind.Co.Ltd., Chuo-ku, Osaka 540-6319 (JP); NONOMURA, Mao c/o Matsushita El.Ind.Co.Ltd., Chuo-ku, Osaka 540-6319 (JP)
(74) Representative: Grünecker, Kinkeldey, Stockmair & Schwanhäusser Anwaltssozietät
(86) International application number: PCT/JP2004/016130
(87) International publication number: WO 2005/043868

(57) **Abstract**

The present invention provides a connecting device which has a connecting portion capable of rotatably connecting two housing portions without protruding from the two housing portions and can stably keep the housing portions arranged so as to face each other.

The connecting device includes; first and third connecting members 31 and 33 which have flexibility and foldably connect an upper housing portion 1 and a lower housing portion 2 with a predetermined gap interposed therebetween; and a second connecting member 32 which has enough restoring force and rigidity to restore a bent state to an unbent state and is curved in an arc shape in sectional view such that a concave portion of the arc is oriented in a direction where the upper and lower housing portions are folded.

## Description

### <Technical Field>

The present invention relates to a connecting device for foldably connecting two housing portions, and to a small electronic apparatus and a folding portable terminal apparatus having the same.

### <Background Art>

In recent years, various types of mobile phones have been developed and used. For example, the mobile phones include a bar-type mobile phone and a folder-type mobile phone which can be folded through a hinge portion.

Such a folder-type mobile phone includes an upper housing having a display unit provided therein, a lower housing portion having an operating unit provided therein, and a hinge portion which foldably connects the upper and lower housing portions such that the display unit and the operating unit face each other. This structure causes the upper housing portion to be rotated on the central axis of the hinge portion relative to the lower housing portion. The hinge portion has a substantially cylindrical shape, and the outer diameter of the hinge portion is generally larger than the thicknesses of the upper and lower housing portions having the display unit and the operating unit, respectively. Therefore, the hinge portion protrudes from the upper surfaces of the upper and lower housing portions (for example, see Patent Document 1).

In the folder-type portable terminal apparatus having the above-mentioned structure, for example, when a user having a long fingernail operates the operating unit, the tip of the fingernail may come into contact with the hinge portion, which makes it difficult for the user to easily operate the operating unit. As a means of solving the inconvenience in use, a structure for ensuring a predetermined distance between the operating unit and the hinge portion has been considered. When the distance increases, the overall length from the upper housing portion to the lower housing portion also increases, resulting in an increase in the size of a portable terminal apparatus.

Therefore, there has been proposed a mobile phone (hereinafter, referred to as a 'folding mobile phone') in which a connecting device for connecting the upper housing portion having the display unit therein and the lower housing portion having the operating unit is formed of a bendable strip member having a thickness smaller than the thicknesses of the upper and lower housing portions (see Patent Document 2).
Patent Document 1: JP-A-2002-111812 (Figs. 1 and 2)
Patent Document 2: Japanese Design Registration No. 1161572

### <Disclosure of the Invention>

### <Problem to be solved by the Invention>

However, in the folding mobile phone disclosed in Patent document 2, the upper and lower housing portions are connected to each other by a thin hinge portion. Therefore, in general, the hinge portion is apt to have weak strength, and when a housing composed of the upper and lower housing portions is unfolded, the upper housing portion is apt to rock or sway.

Further, Patent Document 2 does not disclose a technical means for reliably and stably holding the upper housing portion when a user holds the lower housing portion having the operating unit provided therein. Therefore, the upper housing portion in an unstable state makes it difficult for the user to easily see information displayed on the display unit, such as time information or information on the reception of a phone call. In addition, the rocking transmitted from the upper housing portion causes the lower housing portion to be unstable. As a result, when the user performs mail communication, the unstable state of the lower housing portion makes it difficult for the user to input information, such as characters, to the folding mobile phone.

Furthermore, the detailed connecting structure of the hinge portion for connecting the upper housing portion and the lower housing portion is not disclosed in the folding mobile phone described in Patent Document 2, and thus it is difficult to actually manufacture the folding mobile phone.

Further, in order to reduce the thickness and weight of a mobile phone, it is required to reduce the thickness of the mobile phone to the minimum when the mobile phone is folded. However, in the above-mentioned folding mobile phone, since the thickness of the hinge portion is large in the folded state of the folding mobile phone, there is a limit to reduce the thickness of the folding mobile phone.

Therefore, there has been proposed a structure in which, instead of a hinge portion, a foldable plate member is used for a connecting portion for foldably connecting an upper housing portion and a lower housing portion. However, from the viewpoint of strength, when the thickness of the plate member increases, it is difficult to bend the plate member. On the other hand, from the viewpoint of bendability, when the thickness of the plate member is reduced, the plate member has insufficient rigidity, and thus is apt to be twisted.

The present invention is made in view of the above-mentioned problems, and it is an object of the invention to provide a connecting device having a small thickness which has a connecting portion capable of rotatably connecting two housing portions without protruding from the two housing portions and can stably keep the housing portions arranged so as to face each other. It is another object of the invention to provide an electronic apparatus and a folding portable terminal apparatus having the connecting device.

### <Means for Solving the Problems>

According to an aspect of the invention, a connecting device includes a bendable member which has enough restoring force and rigidity to restore a bent state to an unbent state and foldably connects two housing portions separated from each other by a predetermined distance.

According to another aspect of the invention, a connecting device includes: a sheet-shaped member having flexibility on which two housing portions are fixed at a predetermined gap; and a bendable member which has enough restoring force and rigidity to restore a bent state to an unbent state and is attached to the two housing portions so as to be overlapped with the sheet-shaped member.

According to this structure, the connecting device can foldably connect two housing portions without protruding from the two housing portions, and it is possible to stably keep the two housing portions unfolded.

Further, in the connecting device according to this aspect, it is preferable that the bendable member be a thin plate having an arc shape in sectional view.

According to this structure, the upper and lower housing portions can be arranged so as to face each other by simply bending the bendable member toward the center of the arc. In addition, in this case, since plastic deformation does not occur in the connecting portion, it is possible to prevent the damage of the connecting portion due to repeatedly bending operations.

In the connecting device according to this aspect, it is preferable that the bendable member be attached to the two housing portions, with a concave portion thereof oriented in a direction where the! two housing portions are folded.

According to this structure, it is possible to fold the two housing portions such that the opposing surfaces thereof face each other by simply bending the connecting portion and to prevent the two housing portions from being bent back in a direction opposite to the folding direction.

In the connecting device according to this aspect, preferably, the sheet-shaped member has a folding force generating means for generating folding force to hold the folded state of the housing portions at a substantially central region thereof corresponding to the gap between the two housing portions.

According to this structure, when the two housing portions are a folded state, the two housing portions do not return to the previous unfolded state due to careless handling although they are held in a user's hand. Therefore, it is possible to improve the stability of posture when a folding mobile phone is not used.

In the connecting device according to this aspect, preferably, the sheet-shaped member includes a stopper that is bent to temporarily hold the folded state of the two housing portions.

According to this structure, if the folded state is maintained by only the weight of the upper or lower housing portion, there is a fear that the housing portions may return to the unfolded state due to a certain factor. However, the stopper makes it possible to prevent the folded state of the housing portions from returning to the unfolded state, thereby preventing a switch from being turned on.

According to still another aspect of the invention, a connecting device includes: a connecting portion which foldably connects two housing portions; a flexible wiring member which connects the two housing portions such that they can communicate with each other; and a receiving antenna which is connected to one of the two housing portions.

According to this structure, since the antenna is provided in the connecting device, it is possible to prevent the antenna from projecting from the housing, and thus to reduce the size of the housing. In addition, when two housing portions are folded relative to each other by the connecting device, the flexible wiring member and the antenna are also bent. However, in this case, since the flexible wiring member and the antenna are curved at a large curvature, strong stress is not applied to the antenna and the flexible wiring member.

Further, according to yet another aspect of the invention, an electronic apparatus includes two housing portions; and the above-mentioned connecting device that foldably connects the two housing portions.

According to this structure, in various types of small folding electronic apparatuses each having two housing portions, one having a display unit (for example, an LCD) provided therein and the other having an operating unit (for example, keys) provided therein, such as mobile phones, PDAs, electronic dictionaries, and portable personal computers having a light weight, two housing portions can be foldably connected to each other by the connecting device according to the invention.

In this way, it is possible to further reduce the thickness and weight of a small electronic apparatus, and to mount a cover formed of various types of materials to the small electronic apparatus. In particular, it is possible to replaceably mount a cover having a colorful pattern thereon to the small electronic apparatus according to user's preference.

Further, in the above-mentioned structure, preferably the electronic apparatus further includes a display unit that is provided in one of the two housing portions; and an operating unit that is provided in the other housing portion. When the two housing portions are folded relative to each other, the display unit and the operating unit are arranged opposite to each other.

According to this structure, the following advantages are obtained. First, when a user having a long fingernail operates the operating unit in the unfolded state of the two housing portions, it is possible to prevent the tip of the fingernail from being caught in the connecting portion, which makes it possible for the user to operate a folding mobile phone without any hindrance. Second, when the user operates the operating unit while seeing the display unit in the unfolded state of the two housing portions, the position of the display unit facing the user (for example, the relative position of the one housing portion with respect to the other housing portion) does not vary, which makes it possible to stably keep the unfolded state. Third, it is possible to stably change the unfolded state of the two housing portions to a folded state by adjusting, for example, the rigidity of the bendable member and by using a bendable member having a proper sectional secondary moment or Young's modulus. In addition, it is possible to prevent the unfolded housing portions from being bent back.

Further, in the electronic apparatus according to this embodiment, preferably, the bendable member has a curved shape in sectional view, and both ends of the bendable member in the longitudinal direction are fixed to leading ends of bosses provided on the two housing portions. In addition, the leading ends of the bosses have spherical shapes.

According to this structure, even when the sectional shape or curvature of the bendable member varies corresponding to the folding or unfolding of the two housing portions, the bendable member does not come into contact with the edge of the leading end of each boss, which makes it possible to improve the durability of the bendable member.

In the electronic apparatus according to this aspect, preferably, the bendable member has a curved shape in sectional view, and both ends of the bendable member in the longitudinal direction are fixed to leading ends of bosses provided on the two housing portions. In addition, the leading ends of the bosses each have R portions opposite to each other.

According to this structure, even when the sectional shape or curvature of the bendable member varies corresponding to the folding or unfolding of the two housing portions, the bendable member does not come into contact with the edge of the leading end of each boss, which makes it possible to improve the durability of the bendable member.

According to still yet another aspect of the invention, a folding portable terminal apparatus includes: an upper housing portion which has a display unit provided therein; a lower housing portion which has an operating unit provided therein; and a connecting portion which foldably connects the upper housing portion and the lower housing portion. In this apparatus, the connecting portion includes a plurality of connecting plates each having a curved portion that is curved on an axis parallel to a connecting direction thereof.

In this case, the connecting plates may be arranged in the thickness direction thereof with predetermined gaps therebetween, may be arranged so as to overlap each other with no gap therebetween, or may be arranged in parallel to each other in the width direction thereof.

The connecting plates may be formed of the same material and have the same sectional shape, width, thickness, and sectional curvature, or they may be formed of different materials and have different sectional shapes, widths, thicknesses, and sectional curvatures.

According to this structure, it is possible to easily obtain a predetermined force to keep the unfolded state of two housing portions while reducing bending stress applied to the connecting plates to the minimum.

In the folding portable terminal apparatus according to this aspect, preferably, the plurality of connecting plates overlap each other.

According to this structure, it is possible to easily obtain a predetermined force to keep the unfolded state of two housing portions without increasing the width of the connecting portion.

### <Effects of the Invention>

According to the present invention, it is possible to provide a connecting device not having a connecting portion protruding from one surface of a member having two housing portions fixed thereon and capable of stably keeping the two housing portions unfolded at a predetermined angle. In particular, for example, in a folding mobile phone having this connecting device as a hinge portion thereof, even when a user views a display unit in the unfolded state of the folding mobile phone while walking, the mobile phone is not spontaneously, folded, does not rock, and is not bent back in the unfolding direction (the mobile phone is not further bent in the unfolding direction thereof). Therefore, it is possible to easily read mail, and to get rid of inconvenience in inputting character information to the operating unit, which prevents operationality from being lowered.

According to the invention, a connecting portion for connecting an upper housing portion and a lower housing portion is composed of a plurality of connecting plates each having a curved portion that is curved on an axis parallel to a connecting direction thereof. Therefore, the following advantages are obtained. First, it is possible to reduce the thickness of a folding mobile phone. Second, it is possible to reduce bending stress applied to the connecting plates to the minimum even when a folding operation is repeatedly performed, and thus to prolong the life span of a folding mobile phone.

### <Brief Description of the Drawings>

Fig. 1 is a perspective view illustrating the outer appearance of a folding mobile phone according to an embodiment of the invention.
Fig. 2 is an exploded perspective view of Fig. 1.
Fig. 3A is a diagram illustrating a main body portion and a connecting device provided therein in the unfolded state of the folding mobile phone according to the invention.
Fig. 3B is a diagram illustrating the folded state of the main body portion of the folding mobile phone.
Fig. 4 is a central cross-sectional view when the folding mobile phone according to the invention is unfolded.
Fig. 5 is a central cross-sectional view when the folding mobile phone according to the invention is folded.
Fig. 6 is a block diagram illustrating electrical structure of the main body portion of the folding mobile phone according to the invention.
Fig. 7 is a perspective view illustrating a state when a fashion cover is being attached to the main body portion of the folding mobile phone according to the invention shown in Fig. 1.
Fig. 8 is a perspective view illustrating a state immediately before the fashion cover is completely attached to the main body portion of the folding mobile phone according to the invention shown in Fig. 1.
Fig. 9 is a perspective view illustrating an aspect of the second connecting member being screwed to bosses of the upper and lower housing portions.
Fig. 10 is a diagram illustrating the bosses each having a spherical leading end.
Fig. 11 is a diagram illustrating contact portions between the leading ends of the basses and a curved portion of the second connecting member.
Fig. 12 is a diagram illustrating an R portion provided in the contact portion between the leading end of the bass and the curved portion of the second connecting member.
Fig. 13 is a perspective view illustrating a folding mobile phone according to another embodiment of the invention.
Fig. 14A is a perspective view illustrating a connecting portion in the unfolded state of the folding mobile phone.
Fig. 14B is a perspective view illustrating the connecting portion in the folded state of the folding mobile phone.
Fig. 15A is a perspective view illustrating a connecting portion in the unfolded state of the folding mobile phone.
Fig. 15B is a perspective view illustrating the connecting portion in the folded state of the folding mobile phone.
Fig. 16 is a diagram illustrating force (folding or unfolding force) to fold or unfold a main body portion A.
Figs. 17A to 17E are diagrams illustrating modifications of a plurality of connecting plates: Fig. 17A is a diagram illustrating two connecting plates having different thicknesses; Fig. 17B is a diagram illustrating two connecting plates having curved portions with different curvature radiuses; Fig. 17C is a diagram illustrating two connecting plates formed of different materials; Fig. 17D is a diagram illustrating two connecting plates having different widths; and Fig. 17E is a diagram illustrating two connecting plates having different sectional shapes.
Figs. 18A and 18B are diagrams illustrating a plurality of connecting plates arranged in parallel to each other: Fig. 18A is a perspective view illustrating the connecting portions in the unfolded state of the folding mobile phone; and Fig. 18B is a perspective view illustrating the connecting portions in the folded state of the folding mobile phone.

### <Best Mode for Carrying Out the Invention>

Hereinafter, preferred embodiments of the invention will be described in detail with reference to the accompanying drawings. As a small electronic apparatus of the invention, a folding mobile phone, which is a kind of folder-type mobile phone, will be described.

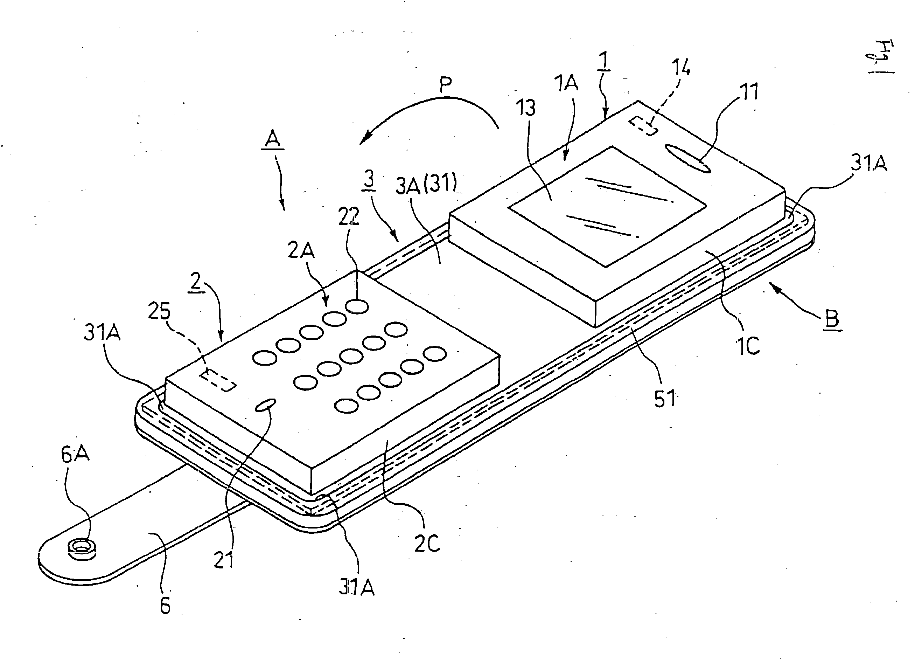

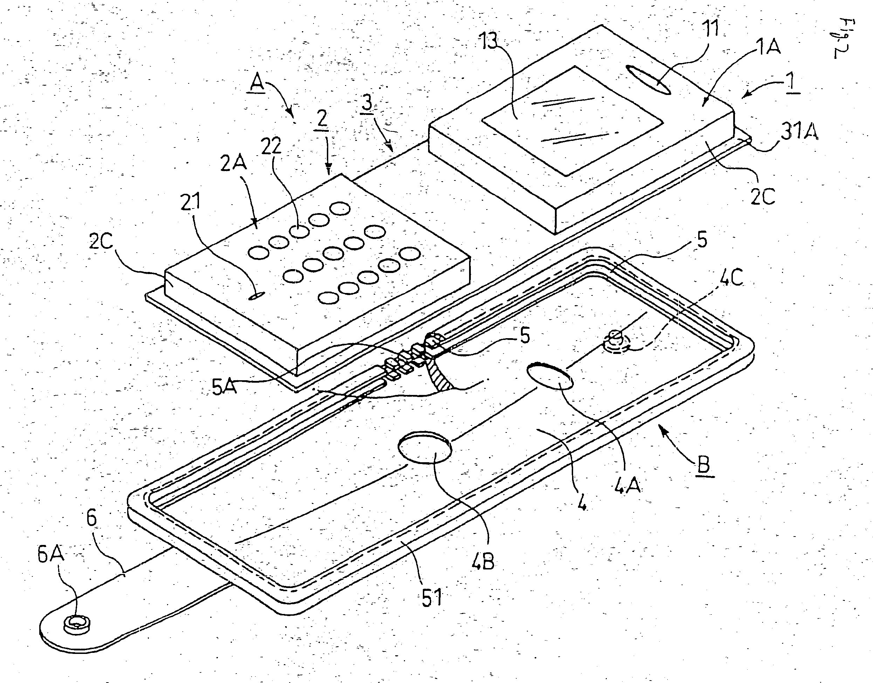

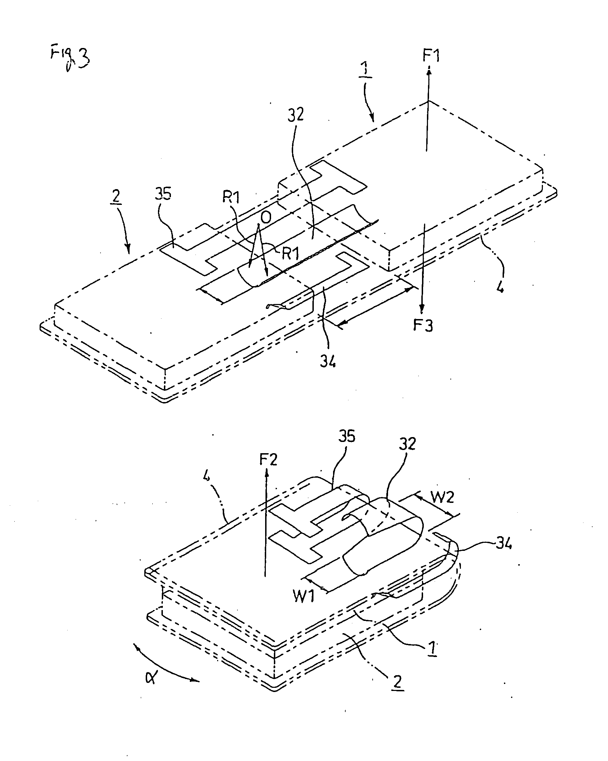

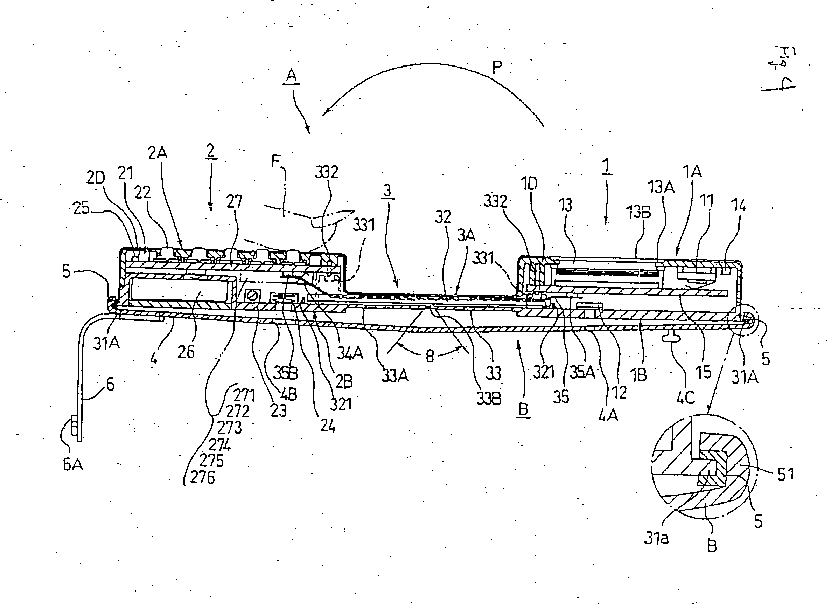

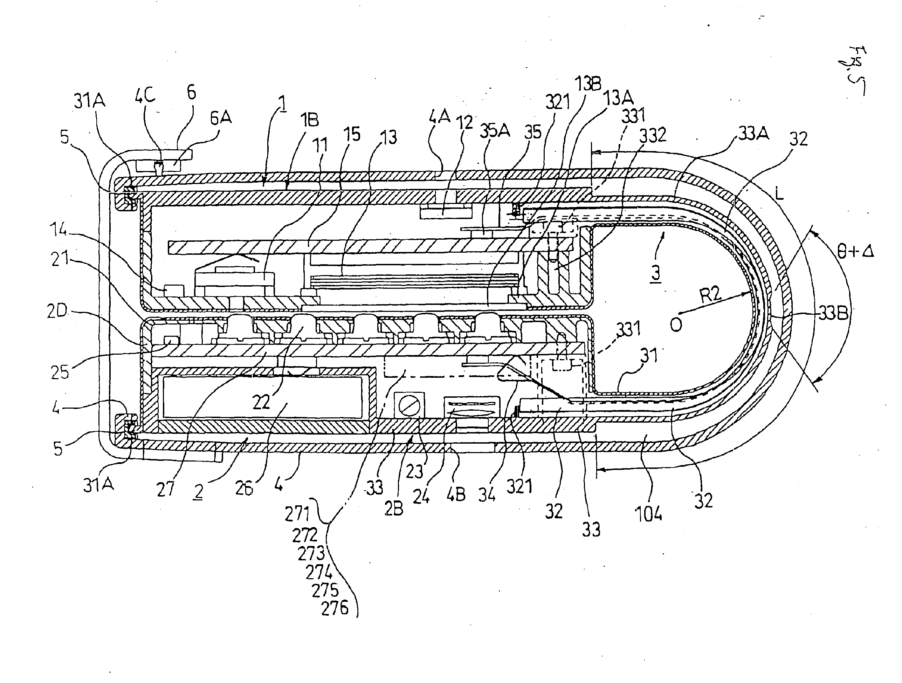

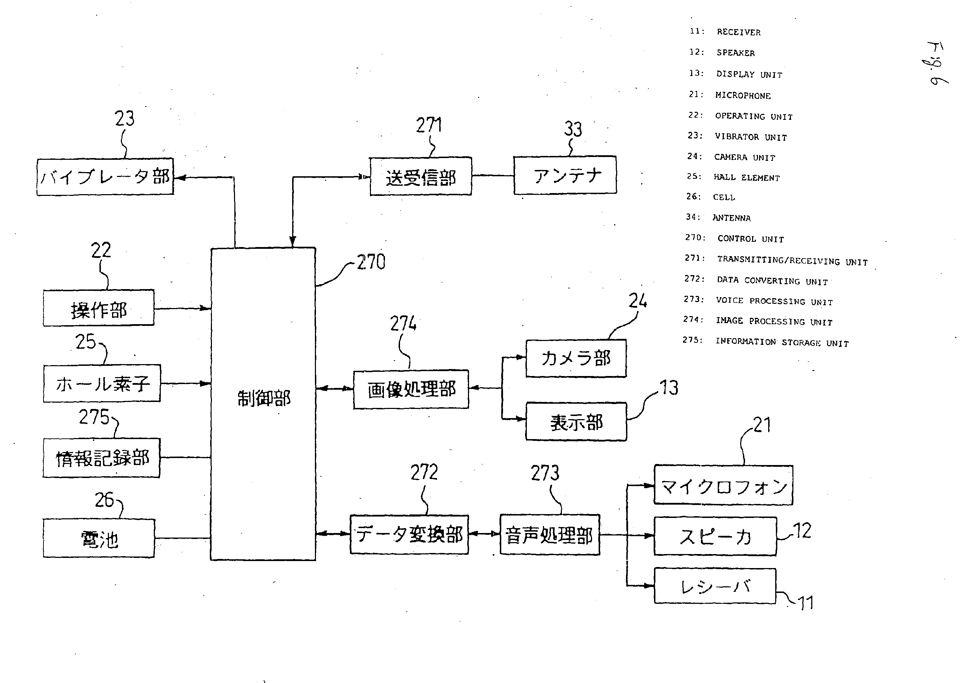

Fig. 1 is a perspective view illustrating the appearance of a folding mobile phone according to the invention. Fig. 2 is a partial exploded perspective view of Fig. 1. Figs. 3A and 3B are diagrams illustrating the unfolded state and the folded state of a connecting device of the folding mobile phone according to the invention, respectively. Fig. 4 is a central cross-sectional view illustrating the unfolded state of the folding mobile phone according to the invention. Fig. 5 is a central cross-sectional view illustrating the folded state of the folding mobile phone according to the invention. Fig. 6 is a block diagram illustrating the electrical structure of a main body portion of the folding mobile phone according to the invention.

As shown in Figs. 1 and 2, the folding mobile phone according to this embodiment includes, as main components, a main body portion A and a fashion cover B provided on an outer surface of the main body portion A.

As shown in Figs. 1 to 6, the main body portion A includes a housing composed of an upper housing portion 1 and a lower housing portion 2 and a connecting device 3 which fixes the upper and lower covers 1 and 2 and is bent at a connecting portion between the upper and lower housing portions 1 and 2.

The upper housing portion 1 accommodates, for example, an earpiece (receiver) 11, serving as a first voice output unit, a speaker 12 (see Fig. 4), serving as a second voice output unit, a display unit 13, a permanent magnet 14, and a first printed board 15 (see Fig. 4). In addition, for example, an LCD constituting the display unit 13, which will be described later, is mounted on the first printed board 15.

Meanwhile, the lower housing portion 2 accommodates, for example, a mouthpiece (microphone) 21, an operating unit 22, a vibrator unit 23 (see Fig. 4), a camera unit 24 (see Fig. 4), a Hall element 25, a detachable cell 26 (see Fig. 4), and a second printed board 27 (see Fig. 4). In Figs. 4 and 6, the second printed board 27 has a transmitting/receiving unit 271, a data converting unit 272, a voice processing unit 273, an image processing unit 274, an information storage unit 275, and a control unit 270 mounted thereon.

The upper and lower housing portions 1 and 2 are fixed on the connecting device 3, with a bendable connecting portion interposed therebetween. The connecting device 3 is mainly composed of a sheet-shaped member 31 and a bendable member 32, and has an antenna 34 and a flexible wiring member (for example, a flexible substrate) 35 provided therein.

Next, components included in the folding mobile phone of this embodiment will be described below in more detail.

### Main body portion A

The housing, which is one of the components forming the main body portion A, is composed of the upper housing portion 1 and the lower housing portion 2, as described above. Meanwhile, the connecting device 3, which is one of the components forming the main body portion A, connects one surface (a surface facing the lower housing portion 2 when the main body portion is folded) of the upper housing portion 1 and one surface (a surface facing the upper housing portion 1 when the main body portion is folded) of the lower housing portion 2. The bending of the connecting device 3 causes the main body portion to be bent at the connecting portion 3A (in the direction of arrow P and the opposite direction thereof in Figs. 1 to 4).

That is, when the folding mobile phone is not used, the main body portion A is folded, that is, the upper housing portion 1 is bent with a surface thereof facing (being opposite to) the lower housing portion 2, as shown in Fig. 5. On the other hand, when the folding mobile phone is used, as shown in Figs. 1 and 4, the main body portion A is unfolded such that a user's face is opposite to the upper housing portion 1 and the lower housing portion 2.

### (1) Upper housing portion 1

The receiver 11, which is an earpiece, is provided on a main surface 1A of the upper housing portion 1 which is opposite to the lower housing portion 2 in the folded state of the main body portion A such that a voice is output from the main surface 1A. When the folding mobile phone of this embodiment is normally used, the voice of the other part communicating with the user is output from the receiver 11. Meanwhile, in Fig. 4, the speaker 12 is provided on a rear surface 1B of the upper housing portion 1 opposite to the main surface 1A, and outputs a ring tone from the rear surface 1B in the standby state of a mail or phone call.

The display unit 13 is provided in a portion of the main surface 1A of the upper housing portion 1 leaning closer to the connecting portion 3A than the receiver 11. In addition, a window frame 13A is formed on the main surface 1A of the upper housing portion 1 so as to correspond to the display unit 13, and a transparent window 13B is bonded to the window frame 13A. Therefore, a user can recognize, for example, characters displayed on the display unit 13 through the transparent window 13B from the outside of the upper housing portion 1. The display unit 13 can be composed of, for example, a liquid crystal display device (LCD), and displays, for example, characters, symbols, numbers, images, and maps.

The permanent magnet 14 is provided in the vicinity of the receiver 11 at a corner of the upper housing portion 1.

The receiver 11, the speaker 12, and the display unit 13 are mounted on the first printed board 15 so as to be electrically connected to the control unit 270, as shown in Fig. 6.

### (2) Lower housing portion 2

The microphone 21, which is the mouthpiece, and the operating unit 22 are provided on a main surface 2A of the lower housing portion 2 that is opposite to the main surface 1A of the upper housing portion 1 when the main body portion A is folded.

The microphone 21 is provided close to an end of the lower housing portion opposite to another end thereof facing the connecting portion 3A.

A finger F of a user who operates the operating unit 22 is represented by two-dotted chain lines in Fig. 4. The user can operate the operating unit 22 to perform a ring up or ring off operation, an operation of adjusting the volume of a ring tone output from the receiver 11 or the speaker 12, an operation of inputting characters, symbols, or numbers, an operation of driving a camera unit 24, and a switching operation to a manner mode. Unlike the related art, in this embodiment, a hinge portion that has a substantially cylindrical shape in cross-sectional view and protrudes toward the upper direction is not provided in front of the finger,of the user. Therefore, for example, even when the user's fingernail is long, the user can easily operate the operating unit 22.

The vibrator unit 23 starts operating when a call is received to inform the user of the reception of the call.

The camera unit 24 is provided on a rear surface 2B (see Fig. 4) of the lower housing portion 2 opposite to the main surface 2A in parallel to the cell 26 detachable from the lower housing portion 2, and is capable of capturing the image of a subject positioned at the rear side of the operating unit 22. Incident light from the subject captured by the camera unit 24 passes through a lens group and is converted from an optical signal into an electric signal by a photoelectric conversion element, such as a CCD (charge coupled device), thereby generating image information. In Fig. 6, the image information is processed by an image processing unit 274, which will be described later, and is then displayed on the display unit 13 as an image.

Therefore, the camera unit 24 and the display unit 13 are connected to the image processing unit 274, and the image information obtained by the camera unit 24 is stored in an information storage unit 275, which will be described later, through a predetermined operation. Further, the information storage unit 275 can store, in addition to the image information, information on telephone numbers, voice information, image information (for example, received image information) other then the image information on the captured image, and information on transmitted or received mail or characters currently being written.

The Hall element 25 is provided on the second printed board 27 so as to be opposite to the permanent magnet 14 when the main body portion A is folded.

Since the Hall element 25 is arranged close to the permanent magnet 14 when the main body portion A is folded, it detects the magnetic field of the permanent magnet 14 to output a detection signal to the control unit 270, which will be described later. On the other hand, when the main body portion A is unfolded, the permanent magnet 14 is separated from the Hall element 25. In this case, the Hall element 25 cannot detect the magnetic field of the permanent magnet 14, so that it does not generate the detection signal.

That is, when the Hall element 25 detects the magnetic field of the permanent magnet 14, the main body portion A is in a folded state. On the other hand, when the Hall element 25 does not detect the magnetic field of the permanent magnet 14, the main body portion A is in an unfolded state. In the folding mobile phone of this embodiment, when the housing is folded, no image is displayed on the display unit 13 in a standby state. On the other hand, when the housing is unfolded, for example, a mark indicating received electric field strength, information on a battery level, time information, and information on an incoming call are displayed on the display unit 13.

The vibrator unit 23, the operating unit 22, the microphone 21, the camera unit 24, the Hall element 25, and the cell 26 are mounted on the second printed board 27 so as to be electrically connected to the control unit 270.

As shown in Fig. 6, the control unit 270 is connected to the transmitting/receiving unit 271, the data converting unit 272, and the information storage unit 275 as well as to the vibrator unit 23, the operating unit 22, the Hall element 25, and the display unit 13 to control these units. The control unit 270 is also connected to the cell 26.

The transmitting/receiving unit 271 is connected to the antenna 34, and processes data received by the antenna 34 to output the data to the data converting unit 272. The data converting unit 272 is connected to the voice processing unit 273, and the voice processing unit 273 is connected to the receiver 11, the speaker 12, and the microphone 21.

The data converting unit 272 converts the data transmitted through the transmitting/receiving unit 271 and the control unit 270 from the antenna 34 into voice data and outputs the voice data to the voice processing unit 273. Meanwhile, the voice processing unit 273 decodes the voice data to generate the voice signal, and outputs the voice signal to the receiver 11 or the speaker 12. Then, the receiver 11 or the speaker 12 outputs a voice corresponding to the voice signal transmitted from the voice processing unit 273.

Further, the voice processing unit 273 encodes a voice received by the microphone 21 to generate voice data and outputs the generated voice data to the data converting unit 272. The data converting unit 272 converts the input voice data into communication data and outputs the communication data to the transmitting/receiving unit 271. The transmitting/receiving unit 271 processes the received communication data and transmits the processed data as radio waves by using the antenna 34.

### (3) Connecting device 3

The connecting device 3 is bent when the main body portion A is folded, and is unbent when the main body portion A is unfolded. That is, the connecting device 3 has flexibility, and includes a sheet-shaped member for fixing the upper and lower housing portions 1 and 2 with the connecting portion 3A, which is a central portion, interposed therebetween, and a bendable member having enough restoring force and rigidity to return from a bent state to a flat state.

As shown in Fig. 4, the connecting device 3 of this embodiment includes a first connecting member 31, a second connecting member 32, and a third connecting member 33. Among them, the first connecting member 31 and the third connecting member 33 form the sheet-shaped member, and the second connecting member 32 forms the bendable member.

Further, the second connecting member 32, the antenna 34, and the flexible wiring member 35 are provided in a gap between the first connecting member 31 and the third connecting member 33. One end (a power supply portion 34A) of the antenna 34 is connected to a power supply portion of the second printed board 27, and the other end thereof extends toward the upper housing portion 1. The flexible wiring member 35 having a linear shape has one end connected to the first printed board 15 through a connector 35A and the other end connected to the second printed board 27 through a connector 35B.

As described above, the first connecting member 31 constitutes the connecting portion 3A for connecting the upper and lower housing portions 1 and 2 together with the third connecting member 33. In particular, the first connecting member 31 of this embodiment forms the surface of the connecting portion 3A (a surface facing the same direction as that in which the main surface 1A of the upper housing portion 1 and the main surface 1B of the lower housing portion 2 face) and is connected to the outer surface of the upper housing portion 1 and the outer surface of the lower housing portion 2 (is also used as the outer surfaces of the upper and lower housing portions 1 and 2). In addition, a portion of the first connecting member 31 forms a flange portion 31A protruding from side surfaces 1C and 2C of the upper and lower housing portions 1 and 2 toward the outside.

The second connecting member 32 is provided so as to be laid across the rear surface 1B of the upper housing portion 1 and the rear surface 2B of the lower housing portion 2. The second connecting member 32 is formed of a thin sheet of steel having flexibility and rigidity (for example, carbon tool steel or stainless steel).

The third connecting member 33 integrally connects the rear surface 1B of the upper housing portion 1 to the rear surface 2B of the lower housing portion 2, and both ends of the third connecting member 33 are also connected to the rear surface 1B of the upper housing portion 1 to the rear surface 2B of the lower housing portion 2 (that is, the third connecting member 33 is also used as the rear surfaces of the upper and lower housing portions 1 and 2). In addition, the second connecting member 32 is interposed between the first connecting member 31 and the third connecting member 33.

Further, the first connecting member 31 and the third connecting member 33 are formed of a proper material having flexibility, such as thermoplastic polyester ether elastomer or polyurethane resin. In addition, a material forming the first connecting member 31 and the third connecting member 33 is not limited to the above-mentioned material. For example, any material can be used for the first and third connecting members 31 and 33 as long as it has flexibility and rigidity.

Inner surfaces 1D and 2D of the main surfaces 1A and 2A of the upper and lower housing portions 1 and 2 formed by the first connecting member 31 are formed of a material, such as an ABS resin, different from that forming the main surfaces 1A and 2A. That is, the upper housing portion 1 and the lower housing portion 2 are integrally formed by a different material molding method (for example, an inserting molding method) for integrally forming a product with different kinds of materials.

The reason why the upper and lower housing portions 1 and 2 are integrally formed with the first connecting member 31 of the connecting device 3 by the different material molding method will be described below.

As shown in Figs. 4 and 5, the third connecting member 33 is fixed to the boards 15 and 27 by driving tapping screws 331 into holes 332 formed in the inner surfaces 1D and 2D of the upper and lower housing portions 1 and 2. In a case in which the tapping screws are tightened with a predetermined clamping torque in order to obtain a predetermined axial force (clamping force), when the allowable shear stress of the holes 332 is weak, the holes 332 are damaged.

It has been known that, in general, the allowable shear stress of ABS resin is stronger than that of the thermoplastic polyether ester elastomer. Therefore, in this embodiment, the holes 332 provided in the main surfaces 1A and 2A of the upper and lower housing portions 1 and 2 (which are connected to the operating unit 22 and the window frame 13A of the display unit 13) are formed of the ABS resin, which prevents the damage of the holes 332 when the screws are tightened.

However, when the holes 332 connected to the main surfaces 1A and 2A of the upper and lower housing portions 1 and 2 and the window frame 13A are formed of the thermoplastic polyether ester elastomer, the transparent window 13B is not fixedly adhered to the window frame 13A by an adhesive tape since the thermoplastic polyether ester elastomer generally has weak adhesion. In this case, for example, when the folding mobile phone is dropped, the transparent window 13B may be separated from the window frame 13A.

From this point of view, in this embodiment, in order to solve the above-mentioned problem, the outer surfaces 1A and 2A (actually, formed by the first connecting member 31) of the upper and lower housing portions 1 and 2 formed of thermoplastic polyether ester elastomer are integrally formed with the holes 332 and the window frame 13A formed of ABS resin.

The first connecting member 31 is not necessarily integrally formed with the upper and lower housing portions 1 and 2 by the different material molding method. For example, the first connecting member 31 may be separately formed from the upper and lower housing portions 1 and 2, and the connecting device 3 may be integrally fixed to the upper and lower housing portions 1 and 2 by a mechanical coupling means (for example, a screw or an adhesive). In addition, even when the upper and lower housing portions 1 and 2 and the first connecting member 31 are formed of the same material (for example, thermoplastic polyether ester elastomer), the third connecting member 33 may be fixed to the upper and lower housing portions 1 and 2 or the transparent window 13B may be fixed to the window frame 13A by proper methods other than the above-mentioned method.

Next, the second connecting member 32 forming the bendable member of the connecting device 3 will be described below in detail, mainly referring to Figs. 3A and 3B.

Figs. 3A and 3B are diagrams illustrating the second connecting member 32 of the connecting device 3 of the main body portion A. Fig. 3A is a diagram illustrating the unfolded state of the connecting device 3 of the main body portion A, and Fig. 3B is a diagram illustrating the folded state of the connecting device 3 of the main body portion A.

As shown in Figs: 3A to 5, the second connecting member 32 is a thin plate extending in a straight line from the upper housing portion 1 to the lower housing portion 2 and having an arc shape in sectional view with a width W1 and a curvature R1. The center of the curvature R1 is placed at the main surface 1A of the upper housing portion 1 (or the main surface 2A of the lower housing portion 2), and the center is represented by a point O (Fig. 3B). In addition, one end of the second connecting member 32 is attached to the upper housing portion 1 (that is, the first connecting member 31 integrally formed with the lower housing portion 2 in Fig. 5), the other end thereof is attached to the lower housing portion 2 (similarly, the first connecting member 31 integrally formed with the lower housing portion 2). As will be described later, when being bent, the arrangement positions of the two ends are defined by a stopper 321 (which is provided in the first connecting member 31 shown in Fig. 5) after a predetermined amount of clearance required at the time of bending is ensured.

As shown in Fig. 3A, when the connecting device 3 of the main body portion A is in the unfolded state, the second connecting member 32 extends in a straight line from the upper housing portion 1 to the lower housing portion 2, so that a stable state is maintained. In this state, even when the connecting device 3 of the main body portion A in the unfolded state (Fig. 1) is further bent in a direction opposite to the direction of arrow P, since the second curved connecting member 32 has a high degree of rigidity in a direction where the curved state is released (the unfolded main body portion A is further bent), force to maintain the unfolded state is generated (hereinafter, referred to as 'curve maintaining force'). Therefore, force (reverse bending force) required for bending the main body portion in a direction where the unfolded main body portion A is further bent, that is, a direction of a convex curved surface (positive curved surface) opposite to a concave curved surface (negative curved surface) is considerably stronger than force (folding force) required to bend the main body portion in the direction of arrow P, which makes it difficult for the main body portion to be bent. The anti-bending force is determined by the secondary moment of the cross section or the Young's modulus.

In contrast, when the main body portion is bent in the direction of arrow P (see Fig. 4) by force stronger than a predetermined force, the central portion of the second connecting member 32 is bent in a direction where the main body portion A is folded by jumping, but plastic deformation does not occur therein. That is, when force applied is released, the central portion of the second connecting member 32 returns to the flat state by restoring force, which causes the connecting device 3 of the main body portion A to return to the unfolded state. In order words, the second connecting member 32 also functions as a means for preventing the unfolded main body portion A from easily being bent in the direction of arrow P.

As shown in Fig. 3B, when the connecting device 3 of the main body portion A is folded, the second connecting member 32 is bent at the connecting portion 3A, which is a central portion between the upper housing portion 1 and the lower housing portion 2. In this case, the sectional shape of the connecting portion 3A, which is a central portion of the second connecting member 32, is elastically deformed from the arc shape to a linear shape, causing a width W2 of the connecting portion 3A to be larger than the width W1 before the elastic deformation.

When the connecting portion 3A is elastically deformed, force to return the connecting portion to the arc shape and the linear shape is generated from the second connecting member 32. That is, when the connecting device 3 of the main body portion A is folded, the second connecting member 32 is bent while receiving force to return the connecting portion to the linear shape (force to restore the width W2 to the width W1).

In this embodiment, the second connecting member 32 is formed of steel having a thickness of 0.1 mm. In addition, the second connecting member 32 has a width W1 of 15 mm and a curvature radius R1 of 20 mm, and a distance L between the upper housing portion 1 and the lower housing portion 2 is 45 mm. In this case, bending starting force (folding force, which will be described later) F1 when the unfolded connecting device 3 of the main body portion A is bent in the direction of arrow P is about 0.6 [N (Newton)]. When the connecting device 3 of the main body portion A is folded, restoring force F2 to restore the connecting device 3 of the main body portion A to the unfolded state is about 1.5 [N]. In addition, force F3 required to further bend the unfolded connecting device 3 of the main body portion A in the direction of arrow P ('reverse bending force', which will be described later) is about 2 [N].

The second connecting member 32 which has an arc shape in sectional view and is provided such that the center O of the arc is positioned on the main surface 1A of the upper housing portion 1 is used as the bendable member of the connecting device 3. As a result, it is possible to make the force F3 to reversely bending the connecting device (this is referred to as 'reverse bending force'), which is not generally used, stronger than the force F1 required for a user to generally operate the main body portion (force required to fold the main body portion (this is referred to as 'folding force')).

Therefore, when the folding force F1 or the reverse bending force F3 is appropriately set, it is possible to easily fold the unfolded main body portion A. In addition, it is possible to prevent the unfolded connecting device 3 from being reversely bent, and thus to provide the connecting device 3 capable of improving the convenience of users.

Further, in order to appropriately set the folding force F1 and the reverse bending force F3, a plurality of second connecting members may be provided. In this case, it is possible to strengthen the folding force F1 and the reverse bending force F3 while weakening stress acting on the second connecting members 32. A method of arranging the second connecting members 32 may depend on a method of arranging the antenna or the flexible wiring member. For example, the second connecting members 32 may be arranged so as to overlap one another. In particular, the second connecting members are preferably arranged so as to overlap each other in order to reduce a space. That is, in this case, the second connecting member 32 is formed of a leaf spring having a laminated structure.

Further, when the second connecting member 32 is bent, the curvature radius of the second connecting member 32 is larger than that of the first connecting member 31 by at least a value corresponding to the thickness thereof. Therefore, both ends of the second connecting member 32 in the longitudinal direction should be fixed to the housing (rear surface) with a predetermined clearance, or one end should be slidably fixed to the housing (rear surface) such that the main body portion A can be reliably folded. In this embodiment, both ends of the second connecting member 32 are fixed to the rear surfaces 1B and 2B of the upper and lower housing portions 1 and 2 with a predetermined clearance (not shown).

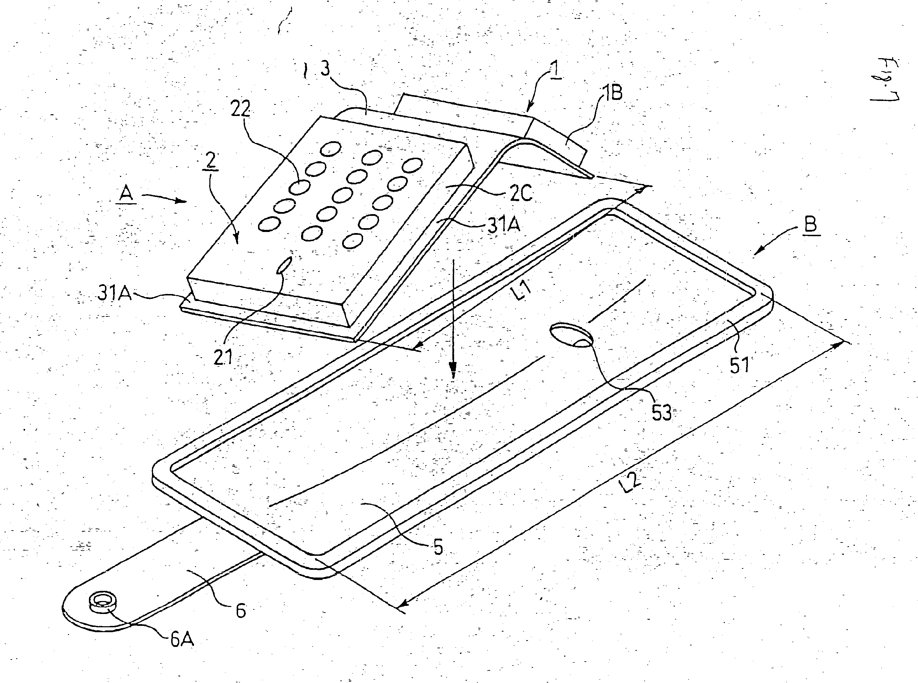

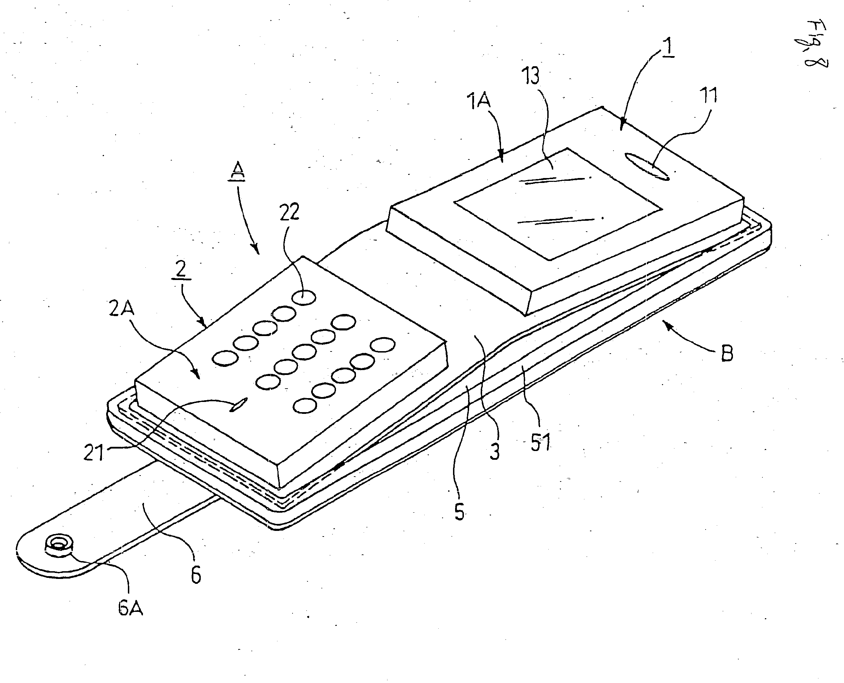

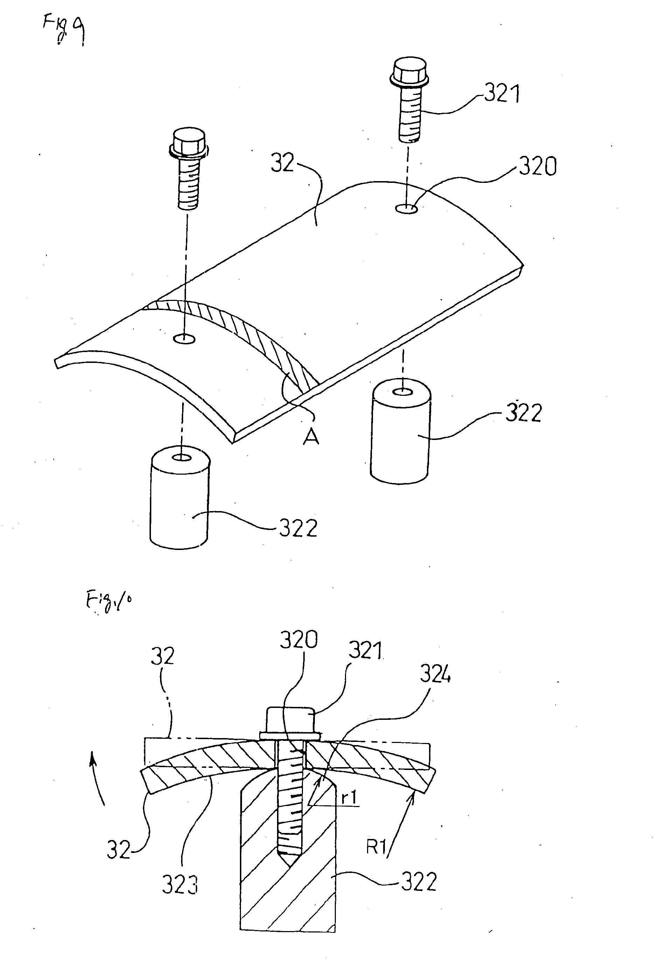

Figs. 9 to 12 are diagrams illustrating an example in which both ends of the second connecting member 32 are screwed to the corresponding bosses 322 of the upper and lower housing portions 1 and 2.

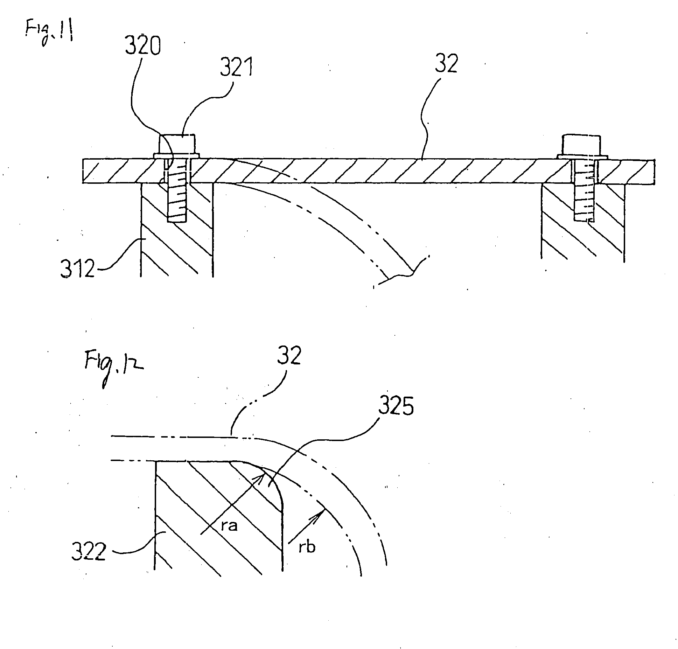

Through holes 320 are provided substantially in the center of the arc in the vicinities of both ends of the second connecting member 32 in the longitudinal direction thereof, and the second connecting member 32 is fixed to the leading ends of the bosses 322 provided on the inner surfaces of the upper and lower housing portions 1 and 2 by screws 321. In this case, as shown in Fig. 9, spherical portions 324 (the radius of the leading end is 'r1') are formed at the leading ends of the bosses 322. Therefore, when the upper and lower housing portions 1 and 2 are in the folded position, the curved portion 323 of the second connecting member 32 can be' deformed to be straightened (two-dotted chain line of Fig. 10). When the curved portion 323 is deformed, the second connecting member 32 does not come into contact with the edges of the leading ends of the bosses 322. Therefore, it is possible to improve the bending durability of the second connecting member 32.

In regard to the relationship between the radius r1 of the spherical portion 324 and an initial curvature radius R1 of an inner circumferential surface of the second connecting member 32 in the widthwise direction of the curved portion 323 thereof, in case of R1 < r1, when the second connecting member 32 is screwed to the basses 322, R1 is equal to r1. Therefore, R1 should be equal to or larger than r1.

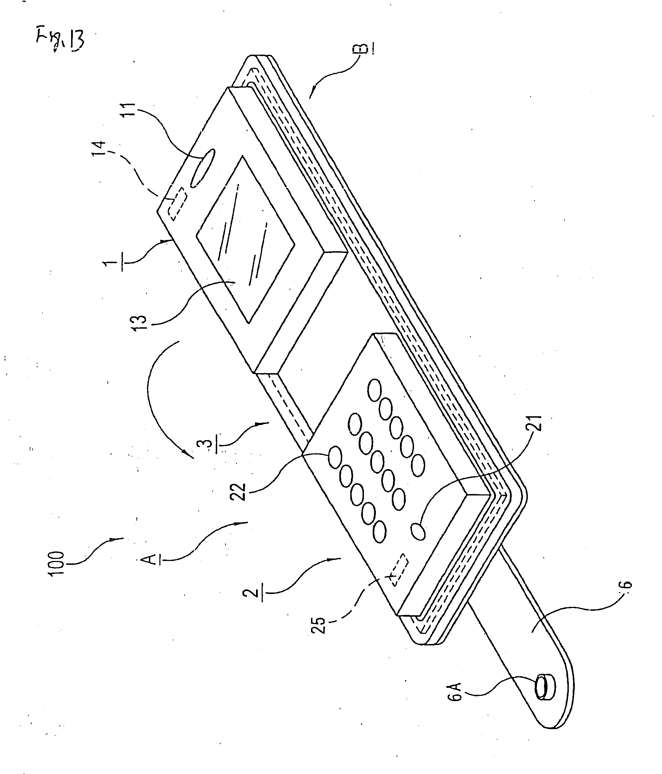

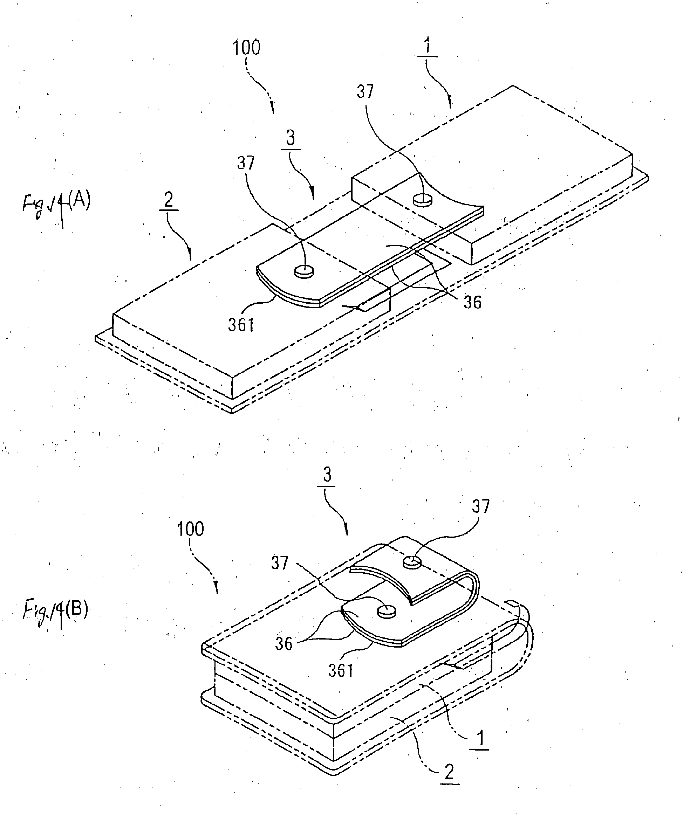

As shown in fig. 11, when the upper and lower housing portions 1 and 2 are folded relative to each other, the second connecting member is also bent in the longitudinal direction thereof. Therefore, as shown in Fig. 12 (which is an enlarged view of the vicinity of the boss 322 shown in Fig. 11), when R portions 325 are formed in inner portions, opposite to each other, of the leading end of each of the bosses 322 provided on the inner surfaces of the upper and lower housing portions 1 and 2, it is possible to prevent the second connecting member 32 from coming into contact with the edges of the leading ends of the bosses 322 when the upper and lower housing portions 1 and 2 are folded or unfolded relative to each other, which makes it possible to improve the bending durability of the second connecting member 32.

In the bosses 322 without the R portions 325, when a curvature radius 'ra' is zero, a curvature radius 'rb' formed by the second connecting member 32 in the longitudinal direction thereof on the upper surface of the boss 322 is also zero. Therefore, in this case, stress is concentrated on the corner portions of the boss 322, which causes the damage of the corner portions.

In contrast, as in this embodiment, the R portion 325 causes the inner circumferential surface of the second connecting member 32 to be curved along the R portion 325 at a curvature radius rb in the longitudinal direction thereof, resulting in rb = ra. Therefore, in this case, the curvature radius rb becomes equal to or larger than the curvature radius ra. That is, the curvature radius rb formed when the second connecting member 32 is curved is obtained by the R portion 325.

Therefore, when the second connecting member 32 is curved, stress caused by the second connecting member 32 is not concentrated onto a specific portion of the boss 322. Thus, there is no fear that the bosses 322 may be damaged, and it is possible to improve the bending durability.

Even when the second connecting member 32 is formed of a plate member, the same effects as described above are obtained.

Next, a supplementary description of the third connecting member 33 will be made below.

As shown in Figs. 4 and 5, in the third connecting member 33, one surface (outer surface) of a portion corresponding to the connecting portion 3A is recessed in the lengthwise direction thereof over a predetermined length L (see Fig. 5), thereby forming a thin portion (which forms a folding force generating means) 33A. A thinnest portion (a concave portion; which also forms a folding force generating means) 33B is provided in the center of the thin portion 33A in a linear shape along a width direction W (a depth direction in Figs. 4 and 5).

The entire thin portion 33A can be easily bent in the direction where the main body portion A is folded by forming the thin portion 33A and the thinnest portion 33B in the main body portion A. When the main body portion A is folded, the thin portion 33A is bent with a distance from the first connecting member 31 being narrowed, while expanding a little. At the same time', the thinnest portion 33B is linearly curved along the width direction where the thinnest portion 33B is formed, while uniformly expanding. When the expansion angle of the thinnest portion 33B before the third connecting member 33 shown in Fig. 4 expands (before the main body portion A is folded) is referred to as 'θ', the expansion angle of the thinnest portion 33B after the third connecting member 33 shown in Fig. 5 expands (after the main body portion A is folded) is θ + Δ.

In the folded state of the main body portion A, when the upper housing portion 1 is intentionally turned with respect to the lower housing portion 2 in the direction of arrow α shown in Fig. 3B, the expansion angle of the third connecting member 33 becomes non-uniform. When the intentional turning is released, the expansion angle becomes uniform. That is, when the main body portion A is folded, the thinnest portion 33B of the third connecting member 33 regulates the bending position of the connecting portion 3A. Therefore, when the thinnest portion 33B of the third connecting member 33 is not provided, there is a fear that, when the main body portion A is folded, the upper housing portion 1 may be arbitrarily turned in the direction of arrow α with respect to the lower housing portion 2.

Further, when the main body portion A is folded, force to restore the first and third connecting members 31 and 33 to the linearly unbent states is generated. However, since the restoring force is considerably weaker than the force F2 generated from the second connecting member 32 (hereinafter, referred to as 'restoring force'), the folding or unfolding force of the main body portion A is almost determined by only the second connecting member 32. This is similarly applied when the main body portion A is folded and at the time of expansion. That is, in these cases, the restoring force also depends on only the second connecting member 32.

When the main body portion A is unfolded, the first to third connecting members 31 to 33 are unbent in a straight line, and this unbent state is maintained by the rigidity of the second connecting member 32. That is, when the lower housing portion 2 is held by a user's hand, the upper housing portion 1 is kept open. Therefore, the upper housing portion 1 is not bent in the direction of arrow P and in a direction opposite to the direction of arrow P. Thus, it is possible to easily fold the main body portion A.

Since the connecting portion 3A is flush with the rear surface 1B of the upper housing portion 1 and the rear surface 2B of the lower housing portion 2, a curvature radius R2 (see Fig. 5) of the connecting portion 3A when the main body portion A is folded is substantially equal to half the sum of the thickness of the upper housing portion 1 and the thickness of the lower housing portion 2.

Therefore, when the main body portion A is folded, the antenna 34 and the flexible wiring member 35 provided in the connecting portion 3A are also bent. However, since the curvature radius R2 is sufficiently large, storing stress does not occur in the antenna 34 and the flexible wiring member 35.

As a result, it is not necessary to use members having a long bending life span and high durability for the antenna 34 and the flexible wiring member 35. In addition, when the main body portion A is folded or unfolded, the antenna 34 and the flexible wiring member 35 are provided as shown in Figs. 3A and 3B.

Next, the fashion cover B will be described below in detail with reference to Figs. 1 and 2.

As shown in Fig. 2, the fashion cover B includes an appearance portion 4 having a sack shape, made of a fashionable material, such as jersey or leather, and a frame portion 5 provided in the appearance portion 4.

The appearance portion 4 has a first opening 4A through which a voice is output from the speaker 12 and a second opening 4B formed to correspond to the position of the camera 24. The frame portion 5 has a 'U' shape in sectional view, and the edge of the first connecting member 31 and the flange portion 31A are fitted into the frame portion 5, so that the fashion cover B is mounted on the main body portion A while covering the third connecting member 33. In addition, the fashion cover B is detached from the main body portion only by separating the frame portion 5 from the flange portion 31A.

The frame portion 5 is formed of a flexible elastic material (for example, a rubber material, such as EPDM or urethane, or polyurethane resin having low hardness), and has a plurality of slits 5A provided therein. When the main body portion A is folded and the connecting portion 3A is bent, gaps between the slits 5A vary to cause the frame portion 5 to be easily bent, thereby giving followingness to the main body portion A.

A belt member 6 having a hook 6A, serving as one closing means, provided therein is sewed onto one end of an outer surface (a lower surface in Figs. 1 and 2) of the appearance unit 4 of the fashion cover B. In addition, an engaging portion 4C, serving as the other closing means, which is fastened to the hook 6A is provided at a position separated from the other end of the outer surface by a predetermined distance.

In this way, when the main body portion A is folded, the belt member 6 is bent so as to pass through the edges of the upper and lower housing portions 1 and 2, thereby fastening the hook 6A to the engaging member 4C provided in the vicinity of the other end of the outer surface of the appearance portion 4. In the folded state of the main body portion A, the restoring force F2 of the second connecting member 32 causes the main body portion A to be unfolded. However, since the hook 6A is fastened to the engaging unit 4C, it is possible to prevent the main body portion A from being unfolded even when the restoring force F2 is applied to the main body portion A.

Further, the folded state of the main body portion A may be maintained by setting the restoring force F2 of the second connecting member 32 to be weaker than that generated by the weight of the upper housing portion 1 or the lower housing portion 2 when the main body portion A is folded, without using the belt member 6.

Next, the operation of the folding mobile phone according to the embodiment will be described below in detail.

In the folding mobile phone having the above-mentioned structure according to this embodiment, when the folding mobile phone is not used, the belt member 6 is fastened to maintain the connecting portion 3A to be folded, with the upper housing portion 1 overlapping the lower housing portion 2. On the other hand, when the fastening between the hook 6A of the belt member 6 and the engaging portion 4C is released to use the folding mobile phone, the main body portion A is unfolded by the restoring force F2 of the second connecting member 32 to return to a substantially flat state, and the unfolded state of the main body portion is stably maintained by the curve holding force (action) of the second connecting member 32.

Therefore, in the stable unfolded state of the main body portion A, for example, making or receiving a phone call, reading mail through the display unit 13, or operating the operation unit 22 to write a letter can be performed. In this case, even when the user views the display unit 13 with a hand holding the lower housing portion 2, the upper housing portion 1 is not bent back by the curve holding force (rigidity) of the second connecting member 32. Therefore, the user can hold the folding mobile phone only in one hand to use it, without feeling inconvenient.

Further, when the main body portion A is unfolded, the gap between the receiver 11 and the microphone 21 becomes largest. In this state, when a receiver is held to a user's ear with the main body portion A being held in the user's hand to answer the telephone, the microphone 21 is positioned in the vicinity of the mouth, which makes it possible for the user to listen to a clear voice and to transmit a clear voice to the other party. In this case, there is a fear that the reverse bending force F3 may be applied to the main body portion A to be bent back, in a state in which the receiver 11 is held to the user's ear. Therefore, when the user further holds the rear surface 1B of the upper housing portion 1, the user can make or answer a phone call in a more stable state.

In Figs. 3A and 3B, in order to prevent the unfolded main body portion A from being further bent in the direction of arrow P, the width W1 of the second connecting member 32 may increase, or the curvature radius R1 may decrease to strength the curve holding force of the second connecting member 32.

Meanwhile, when the folding mobile phone is not used (a call waiting state), folding force stronger than the folding force F1 is applied to the main body portion A such that the main surface 1A of the upper housing portion 1 faces the main surface 2A of the lower housing portion 2, and the hook 6A of the belt member 6 is fastened to the engaging portion 4M, which makes it possible to keep the main body portion A folded. When the main body portion A is folded, the size of the main body portion A is reduced. That is, the projected area of the main body portion in the vertical direction with respect to the main surfaces 1A and 2A of the upper and lower housing portions 1 and 2 is reduced to the minimum, and thus the folding mobile phone is handy to carry.

In the folded state of the main body portion A, the thinnest portion (the concave portion) 33B of the third connecting member 33 expands (see Fig. 5), and the central portion of the second connecting member 32 corresponding to the connecting portion 3A is flattened. In this case, force to release the expanding state is applied to the thinnest portion 33B of the third connecting member 33, and force to restore the flat state to the curved state is applied to the central portion of the second connecting member 32. However, as described above, since the hook 6A provided in the belt member 6 of the first connecting member 31 of the fashion cover B is fastened to the engaging portion 4C, the folded state of the main body portion A is maintained.

Next, an operation of mounting the fashion cover B to the main body portion A will be described below in detail with reference to Figs. 7 and 8.

Figs. 7 and 8 are diagrams illustrating the operation of mounting the fashion cover B to the main body portion A. As shown in Figs. 7 and 8, first, when the main body portion A is bent in a direction opposite to the folding direction thereof (the unfolded main body portion A is bent back in the direction of arrow P), a distance L1 from an end portion (hereinafter, referred to as a leading end) of the flange portion 31A formed in the upper housing portion 1 to an end portion (hereinafter, referred to as a rear end) of the flange portion 31A formed in the lower housing portion 2 is shorter than an inner diameter L2 of a hook-shaped portion 51 of the fashion cover B.

In this state, the leading end and the rear end of the flange portions 31A are inserted into the hook-shaped portion 51 of the frame portion 5 of the fashion cover B. After the insertion, the main body portion A returns to the flat state. Fig. 7 shows a state in which the main body portion A returns to the flat state.

If the main body portion A is not completely flattened, the flange portion 31A of the connecting device 3 is completely fitted to the hook-shaped portion 51. Therefore, when the entire flange portion 31A is fitted to the hook-shaped portion 51, the fashion cover B is completely mounted to the main body portion A.

When the fashion cover B is completely mounted to the main body portion A in this way, it is possible to cover the flange portion 31A, the rear surface (a surface opposite to the main surface 1A) of the upper housing portion 1, and the rear surface (a surface opposite to the main surface 2A) of the lower housing portion 2, without little gap (interval) therebetween.

Further, the fashion cover B is detachably mounted to the main body portion A. The fashion cover B may be detached from the main body portion A in the reverse order of the mounting operation. In this embodiment, the fashion cover B is detachably mounted to the main body portion A. However, when it is not necessary for the user to detach the fashion cover B from the main body portion A, such as when the fashion cover B is formed of genuine leather or a material whose tough may vary, the fashion cover B may be sewed onto the flange portion 31A protruding from the main body portion A. Alternatively, the flange portion 31A may be integrally formed with the fashion cover B, not with the main body portion A so as to be detachable from the main body portion A. That is, the invention is characterized in that the fashion cover B is attached to the flange portion 31A protruding from the main body portion A to the outside, at a position lower than the main surface 1A of the upper housing portion 1 or the main surface 2A of the lower housing portion 2. This structure makes it possible to integrally form a fashion cover made of a fashionable material and the main body portion A, without covering the display unit 13 and the operating unit 22 with a transparent member.

As described above, in the related art, the upper and lower housing portions rotate on the central axis of the hinge device. In contrast, in this embodiment of the invention, two housing portions are connected to each other by a bendable connecting device. In addition, in this embodiment, the connecting device 3 does not protrude from the main surface 1A of the upper housing portion 1 and the main surface 2A of the lower housing portion 2. Therefore, even when a user having a long fingernail operates the operating unit, the user's fingernail does not come into contact with the connecting device 3.

Further, according to this embodiment, since the conventional hinge device is not used, it is possible to provide the connecting device 3 having small volume and size. In order to keep the upper and lower housing portions open, the connecting device 3 includes the second connecting member 32 having an arc-shaped cross section. More specifically, when the main body portion A is unfolded, the second connecting member 32 is arranged with the center of the arc facing the main surface 1A of the upper housing portion 1 (or the main surface 2A of the lower housing portion 2). As a result, the second connecting member 32 is formed in a strip shape that does not occupy much space and has a small thickness and size, and can stably keep the main body portion A unfolded. Therefore, this structure makes it possible to stably perform various operations and to prevent operationality from being lowered.

Furthermore, according to this embodiment, the first connecting member 31 continuously connects the flange portions 31A of the upper and lower housing portions 1 and 2. Therefore, it is possible to easily cover the flange portions 31A with the fashion cover B, thereby covering the outer surface of the main body portion A. In addition, the user can freely replace the fashion cover B according to his or her preference, and thus it is possible to provide a folding mobile phone according to the user's preference. Of course, when the fashion cover B is contaminated, the fashion cover B may be detached and washed. Therefore, it is possible to keep the fashion cover B clean.

In recent years, there has been developed a folding mobile phone having a second display unit. The second display unit is exposed.to the outer surface of the upper housing portion even when the folding mobile phone is folded and displays predetermined information, such as received information and time information. However, in this embodiment, the second display unit is not provided in the main body portion A.

In this embodiment, the second display unit can also be provided in, for example, the rear surface 1B of the upper housing portion 1. That is, for example, a transparent portion may be provided at a position of the fashion cover B corresponding to the second display unit such that the user can view, for example, characters from the outside, or a third opening may be formed.

In order to prevent a third party from seeing the second display unit, for example, an openable cover may be formed to cover the transparent portion or the third opening portion. When the user views the second display unit, the user may take off the cover to confirm displayed information.

The housing portions and the connecting device (the sheet-shaped member and the bendable member) of the invention are not limited to the upper and lower housing portions 1 and 2 and the first to third connecting members 31 to 33 of the above-mentioned embodiment. For example, the following structure may be used: first connector terminals for connection to electronic parts are provided on the bottoms of two housing portions, serving as units; a bendable member, an antenna, and a flexible wiring member (for example, a flexible substrate) are provided in the sheet-shaped member; second connector terminals for connection to the first connector terminals are provided on the sheet-shaped member; and when the rear surfaces of the two housing portions are fixed to the sheet-shaped member, the first and second connector terminals are connected to each other.

In this embodiment, the fashion cover B can be detached from the main body portion A. However, the following structure may be used: the fashion cover and the second connecting member are integrally formed, and the second connecting member is detached from the main body portion.

Further, in this embodiment, the main body portion A is unfolded in a straight line (at an angle of 180°). However, the second connecting member 32 may be formed at a predetermined angle, it may be attached to the main body portion A in a curved state, or it may be provided in an unbent state in the main body portion A that is unfolded at an angle smaller than 180° such that the main body portion A is unfolded at an arbitrary angle smaller than 180°.

Next, a second embodiment of the invention will be described below in detail with reference to the accompanying drawings.

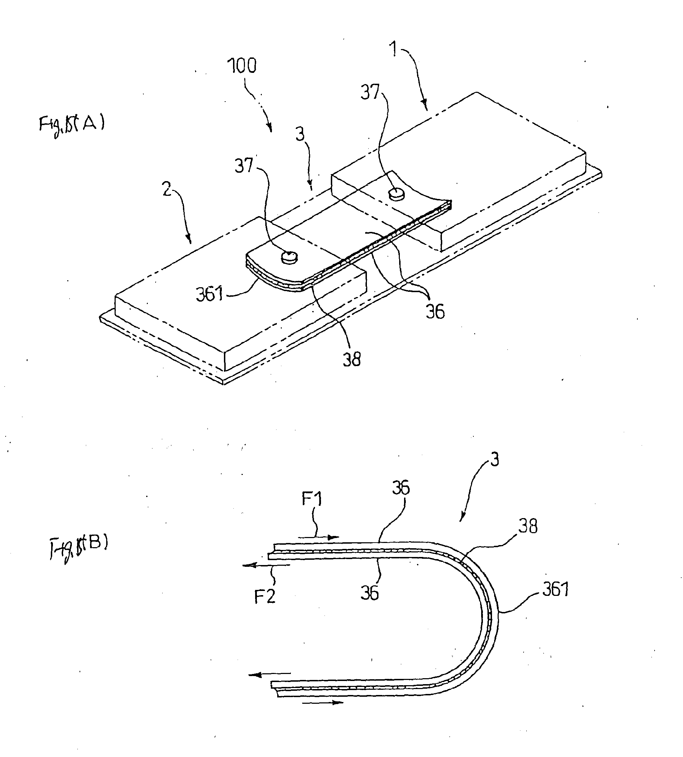

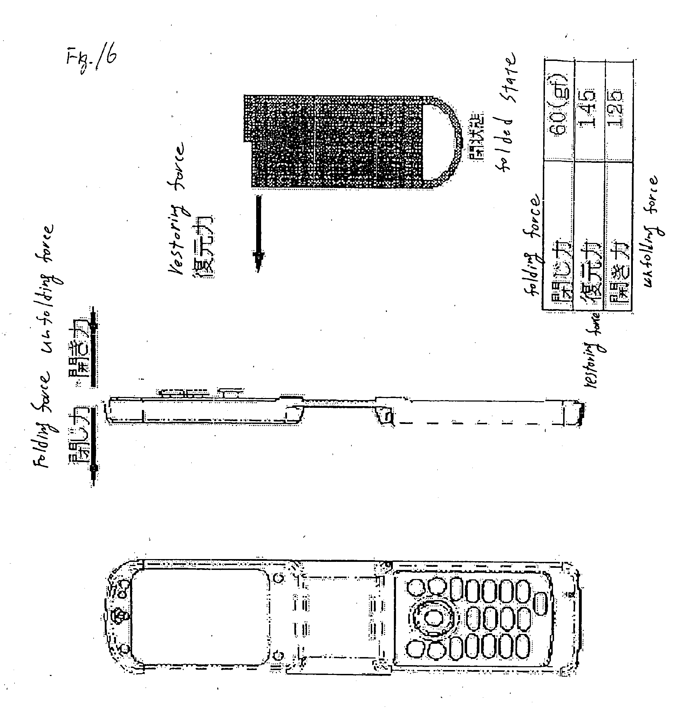

Fig. 13 is a perspective view illustrating the appearance of a folding mobile phone according to this embodiment of the invention. Fig. 14A is a perspective view illustrating a connecting portion in the unfolded state of the folding mobile phone according to this embodiment, and Fig. 14B is a perspective view illustrating the connecting portion in the folded state of the folding mobile phone according to this embodiment.

As shown in Fig. 13, a folding mobile phone 100 of this embodiment includes, as main components, a main body portion A and a fashion cover B provided on the outer surface of the main body portion A.

As shown in Fig. 13, the main body portion A includes an upper housing portion 1 having a display unit 13 provided therein, a lower housing portion 2 having an operating unit provided therein, and a connecting portion 3 for foldably connecting the upper housing portion 1 and the lower housing portion 2. The connecting portion 3 includes a plurality of connecting plates 36 each having a curved portion 361 (see Figs. 14A and 14B) which is curved on an axis parallel to the connecting direction.

Among them, the upper housing portion 1 accommodates, for example, an earpiece (receiver) 11, serving as a first voice output unit, a speaker (now shown), serving as a second voice output unit, a display unit 13, a permanent magnet 14, and a first printed board (now shown). In addition, for example, an LCD constituting the display unit 13 is mounted on the first printed board.

Meanwhile, the lower housing portion 2 accommodates, for example, a mouthpiece (microphone) 21, an operating unit 22, a vibrator unit, a camera unit, a Hall element 25, a detachable cell, and a second printed board.

The Hall element 25 is provided on the second printed board 27 so as to be opposite to the permanent magnet 14 when the main body portion A is folded. The Hall element 25 determines whether the main body portion A is folded by detecting the magnet field of the permanent magnet 14. That is, when the Hall element 25 detects the magnetic field of the permanent magnet 14, the main body portion A is in a folded state. On the other hand, when the Hall element 25 does not detect the magnetic field of the permanent magnet 14, the main body portion A is in an unfolded state. In the folding mobile phone 100 of this embodiment, when the housing is folded, that is, in a standby state, no image is displayed on the display unit 13. On the other hand, when the housing is unfolded, for example, a mark indicating received electric field strength, information on a battery level, time information, and information on an incoming call are displayed on the display unit 13.

As shown in Fig. 14, the connecting portion 3 foldably connects the upper and lower housing portions 1 and 2 by using the bendable connecting plate 36, and is formed by laminating a plurality of connecting plates 36. The connecting plates 36 each have a curved portion that is curved on an axis parallel to a direction where the upper and lower housing portions 1 and 2 are connected. Therefore, the connecting portion 3 is bent in a direction (on the central side of the curve), but is not bent in the opposite direction.

That is, as shown in Fig. 14A, the connecting portion does not generate any force in an unbent state. However, as shown in Fig. 14B, when the connecting portion is bent such that curved portions 31a face each other, the connecting plates are bent by jumping. In this case, restoring force to restore the bent state to the unbent state is generated. Therefore, when the folding mobile phone is used, the main body portion A is unfolded straight. However, when the folding mobile phone is not used, the main body portion A is kept folded. Therefore, a belt member 6 having a hook 6A as a locking member is provided at one end of the fashion cover B, and another locking member (not shown) engaged with the hook 6A is provided at the other end of the fashion cover B.

The connecting plates 36 can be formed of the same material and have the same size, thickness, and curved shape. Both ends of a laminated structure of connecting plates are respectively fixed to the upper and lower housing portions 1 and 2 by fastening members 37 such as bolts or screws. When the laminated connecting plates 36 are bent; a difference in length between an upper connecting plate 36 and a lower connecting plate 36 occurs. Therefore, it is preferable that a fastening hole provided at one end of the connecting plate 36 have a large length. In addition, the connecting plates 36 may overlap each other so as not to contact each other, or the connecting plates 36 may overlap each other with gaps therebetween.

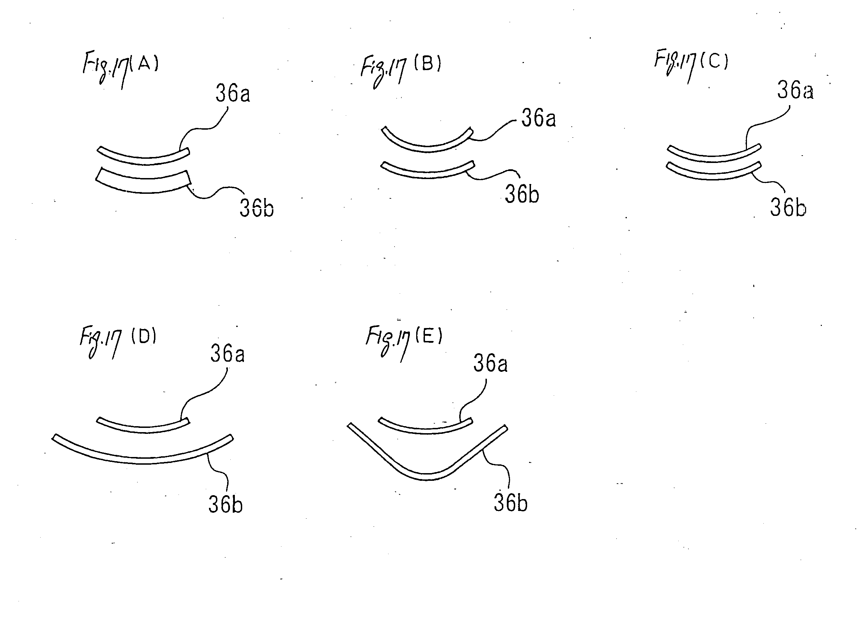

Alternatively, as shown in Fig. 15A, an adhesive tape 38 can be interposed between two connecting plates 36. In this case, since the two connecting plates are bonded to each other by the adhesive tape 38, a small amount of positional deviation occurs between the two connecting plates 36. That is, as shown in Fig. 15B, when upper and lower housing portions 1 and 2 are folded or unfolded, a difference in bend radius occurs between the upper connecting plate 36 and the lower connecting plate 36, which causes a positional deviation between the two connecting plates 36 in the axial direction. In this case, deviating forces F1 and F2 respectively are applied to the upper and lower surfaces of the adhesive tape 38 interposed between the two connecting plates 36. However, since the adhesive tape 38 resists the deviating forces F1 and F2, the forces act in a direction where the two connecting plates 36 are not bent. Therefore, force required to open or close the upper and lower housing portions 1 and 2 becomes strong, which makes it possible to prevent the upper and lower housing portions 1 and 2 from carelessly being opened or closed.

When various types of connecting plates are used, force (folding or unfolding force) to fold the main body portion A will be described below.

The folding or unfolding force includes force (bending force) to bend the main body portion A and force (bending-back force) to bend back the unfolded main body portion A. When the user uses the folding mobile phone to input telephone numbers or to transmit or receive mail, in general, the user holds the lower housing portion with the display unit facing upward. In this case, the user should hold the folding mobile phone such that the display unit does not droop toward the ground.

That is, in order to keep the main body portion A unfolded with the display unit facing upward, a predetermined bending-back force is needed. When the bending-back force is weak, the upper housing portion is apt to droop in the unfolding direction of the main body portion A by the weight thereof.

When the user uses the folding mobile phone while looking up at the display unit (the display unit faces downward), the display unit droops downward, which makes it difficult for the user to input characters to the folding mobile phone.

That is, in order to keep the main body portion A unfolded with the display unit facing downward, a predetermined bending force is needed. When the bending force is weak, the upper housing portion is apt to droop in the folding direction of the main body portion A by the weight thereof.

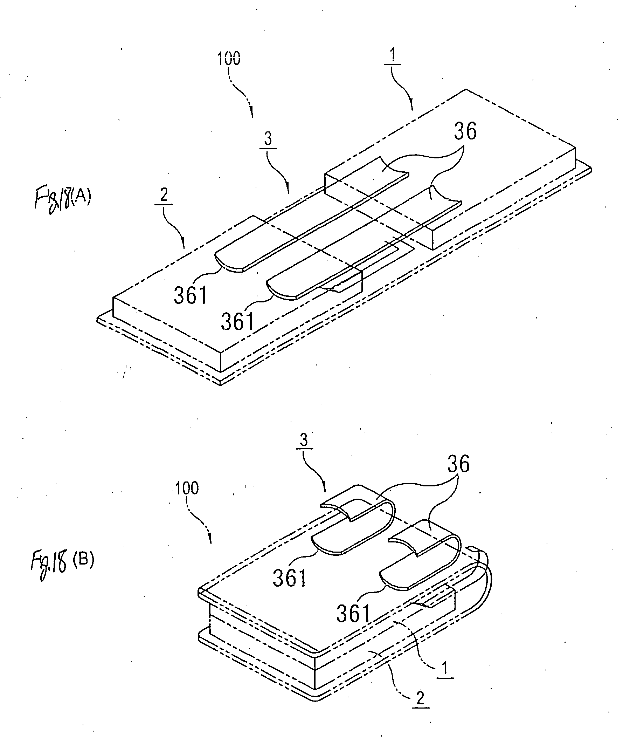

Next, this embodiment will be described with reference to the table shown in Fig. 16. The table shows the results of examination for the bending-back force according to this embodiment of the invention. The main body portion A of this embodiment droops downward when the bending-back force is stronger than F1 and the bending force is stronger than F2.
1. When the connecting plate has a first shape (thickness: 0.1 mm, curvature radius: 30 mm, and width: 20 mm), the bending-back force is weaker than F1, and the bending force is weaker than F2. In the repeated bending examination, the connecting plate endures N bending operations. That is, even when the main body portion A is folded N times, the connecting plate, is not damaged.
2. When the connecting plate has a second shape (thickness: 0.1 mm, curvature radius: 15 mm, and width: 20 mm), the bending-back force is stronger than F1, and the bending force is stronger than F2. However, in the repeated bending examination, the connecting plate is damaged in a (N/3)-th bending operation.
3. When the connecting plate has a third shape (thickness: 0.2 mm, curvature radius: 30 mm, and width: 20 mm), jumping does not occur. That is, the connecting plate is not bent.
4. When two connecting plates having the first shape overlap each other, the bending-back force is stronger than F1, and the bending force is stronger than F2. In the repeated bending examination, a laminated structure of the connecting plates endures N bending operations.

That is, in this embodiment, the laminated structure of connecting plates having a long life span makes it possible to obtain a bending-back force stronger than F1 and a bending force stronger than F2.

In the case of a mobile phone, when the main body portion A is folded and unfolded n times a day in order to make a phone call or transmit/receive mail, the main body portion A is folded and unfolded 360n times a year.

In order to guarantee the life span of the mobile phone for two years, the connecting plate should not be damaged even when the mobile phone is folded and unfolded 720n times. The inventors developed a method of expanding the life span of the connecting plate, in consideration of N folding/unfolding operations (= 1000n), which is the minimum value.

According to the folding mobile phone of this embodiment, since the upper housing portion 1 and the lower housing portion 2 are foldably connected to each other by a plurality of connecting plates 36 each having the curved portion 361, it is possible to reduce the thickness of the folding mobile phone.

Further, in the above-described embodiment, a plurality of connecting plates 36 having, for example, the same size, thickness, and width overlap each other to form the connecting portion 3. However, the invention is not limited thereto. For example, as shown in Figs. 17A to 17E, various modifications of the connecting portion can be made.

That is, as shown in Fig. 17A, two connecting plates 36a and 36b having different thicknesses can be used.

According to this structure, the connecting plate 36b having a large thickness is used as a main plate and the connecting plate 36a having a small thickness is used as a load adjusting plate, thereby minutely setting load (folding or unfolding force).

As shown in Fig. 17B, two connecting plates 36a and 36b having curved portioned 361 different curvature radiuses can be used.

In this case, since the spring constant of the connecting plate 36a is larger than that of the connecting plate 36b, little distortion occurs in the bent state of the connecting plates.

Alternatively, the spring constants of the connecting plates 36a and 36b may be reversely changed. In this case, since the spring constant of the connecting plate 36b is larger than that of the connecting plate 36a, it is possible to improve standability when the folding mobile phone is unfolded.

As shown in Fig. 17C, two connecting plates 36a and 36b formed of different metallic materials can be used.

In this case, when the folding mobile phone is folded or unfolded, it is possible to prevent unpleasant noises from being generated due to friction between the connecting plates 36a and 36b and to reduce surface friction between the two connecting plates 36a and 36b.

As shown in Fig. 17D, two connecting plates 36a and 36b having different widths can be used.

In this case, it is possible to increase the spring constant of one of the two connecting plates 36a and 36b without increasing the total thickness of the connecting plates 36a and 36b.

As shown in Fig. 17E, two connecting plates 36a and 36b having different sectional shapes can be used. In addition, it is possible to use a combination of the above-mentioned structures.

According to this structure, it is possible to increase the spring constant of one of the two connecting plates 36a and 36b without increasing the widths of the connecting plates 36a and 36b.

Further, clamping members for fixing the connecting plates 36 described in the modifications to the upper and lower housing portions 1 and 2 can be appropriately changed, if necessary.

In the above-described embodiment, a plurality of connecting plates 36 overlap each other to form a connecting portion, but the invention is not limited thereto. For example, as shown in Figs. 18A and 18B, a plurality of connecting plates 36 may be arranged in parallel to each other. In Figs. 18A and 18B, the same components as described above have the same reference numerals.

According to this structure, it is possible to obtain the same folding characteristic as that obtained when one connecting plate having a large width is used and higher distortion resistance than the structure in which one connecting plate having a large width is used.

In the above-described embodiment and modifications, two connecting plates 36 are used, but the invention is not limited thereto. For example, three or more connecting plates 36 can be used.

While the invention has been described in terms of various specific and preferred embodiments, the skilled, persons will appreciate that various modifications and changes can be made without departing from the spirit and scope of the invention.

This application claims the benefit of Japanese patent application Nos. 2003-371759, filed on October 31, 2003, 2004-132920, filed on April 28, 2004, and 2004-236670, filed on August 16, 2004, the entire disclosures of which are incorporated herein by reference.

### <Industrial Applicability>

According to the present invention, a connecting device has a structure capable of bending and connecting two housing portions (members) without using a hinge device. The connecting device makes it possible to keep the two housing portions unfolded at a predetermined angle. In addition, the connecting device makes it possible to allow one of the two housing portions to be bent in a direction, but to prevent it from being bent in the opposite direction thereof. The connecting device of the invention can be applied for connecting portions, that is, hinge portions, of small foldable electronic apparatuses, such as a mobile phone, a PDA, a portable PC, and a notebook PC having a light weight. In addition, the connecting device of the invention may be used for a folding or unfolding device for foldably connecting two members, in addition to the small electronic apparatus. A folding portable terminal of the invention is provided with a connecting portion for connecting an upper housing portion and a lower housing portion, and the connecting portion is composed of a plurality of connecting plates each having a curved portion that is curved on an axis parallel to the connecting direction of the housing portions, which makes it possible to reduce the thickness of the folding portable terminal. Thus, the invention can be useful for a folding portable,terminal apparatus which is foldable through a hinge portion.

### <Reference Numerals>

- 1:: UPPER HOUSING PORTION
- 1A:: MAIN SURFACE OF UPPER HOUSING PORTION
- 1B:: REAR SURFACE OF UPPER HOUSING PORTION
- 1C:: SIDE SURFACE OF UPPER HOUSING PORTION
- 1D, 2D:: INNER SURFACE
- 11:: RECEIVER
- 12:: SPEAKER
- 13:: DISPLAY UNIT
- 13A:: WINDOW FRAME
- 13B:: TRANSPARENT WINDOW
- 14:: PERMANENT MAGNET
- 15:: FIRST PRINTED BOARD
- 2:: LOWER HOUSING PORTION
- 2A:: MAIN SURFACE OF LOWER HOUSING PORTION
- 2B:: REAR SURFACE OF LOWER HOUSING PORTION
- 2C:: SIDE SURFACE OF LOWER HOUSING PORTION
- 21:: MICROPHONE
- 22:: OPERATING UNIT
- 23:: VIBRATOR UNIT
- 24:: CAMERA UNIT
- 25:: HALL ELEMENT
- 26:: CELL
- 27:: SECOND PRINTED BOARD
- 270:: CONTROL UNIT
- 271:: TRANSMITTING/RECEIVING UNIT
- 272:: DATA CONVERTING UNIT
- 273:: VOICE PROCESSING UNIT

- 274:: IMAGE PROCESSING UNIT
- 275:: INFORMATION STORAGE UNIT
- 3:: CONNECTING DEVICE
- 31:: FIRST CONNECTING MEMBER (SHEET-SHAPED MEMBER)
- 31A:: FLANGE PORTION
- 32:: SECOND CONNECTING MEMBER (BENDABLE MEMBER)
- 33:: THIRD CONNECTING MEMBER (SHEET-SHAPED MEMBER)
- 331:: TAPPING SCREW
- 332:: HOLE
- 34:: ANTENNA
- 34A:: POWER SUPPLY PORTION
- 35:: FLEXIBLE WIRING MEMBER
- 35A,: 35B: CONNECTOR
- 3A:: CONNECTING PORTION (CENTRAL PORTION)
- 33A:: THIN PORTION (FOLDING FORCE GENERATING MEANS)
- 33B:: THINNEST PORTION (CONCAVE PORTION) (FOLDING FORCE GENERATING MEANS)
- 36:: CONNECTING PLATE
- 361:: CURVED PORTION
- 4:: APPEARANCE PORTION
- 4A:: FIRST OPENING
- 4B:: SECOND OPENING
- 4C:: ENGAGING PORTION (LOCKING MEANS)
- 5:: FRAME PORTION
- 5A:: SLIT
- 6:: BELT MEMBER
- 6A:: HOOK (LOCKING MEANS)
- 100:: FOLDING PORTABLE TERMINAL
- A:: MAIN BODY PORTION
- B:: FASHION COVER
- F:: USER'S FINGER

## Claims

1. A connecting device comprising:
a bendable member which has enough restoring force and rigidity to restore a bent state to an unbent state and foldably connects two housing portions separated from each other by a predetermined distance.

2. A connecting device comprising:
a sheet-shaped member having flexibility on which two housing portions are fixed at a predetermined gap; and
a bendable member which has enough restoring force and rigidity to restore a bent state to an unbent state and is attached to the two housing portions so as to be overlapped with the sheet-shaped member.

3. The connecting device according to claim 1 or 2,
wherein the bendable member is a thin plate having an arc shape in sectional view.

4. The connecting device according to claim 3,
wherein the bendable member is attached to the two housing portions, with a concave portion thereof oriented in a direction where the two housing portions are folded.

5. The connecting device according to any one of claims 2 to 4,
wherein the sheet-shaped member has a folding force generating means for generating folding force to hold the folded state of the housing portions at a substantially central region thereof corresponding to the gap between the two housing portions.

6. The connecting device according to any one of claims 2 to 5,
wherein the sheet-shaped member includes a stopper that is bent to temporarily hold the folded state of the two housing portions.

7. A connecting device comprising:
a connecting portion which foldably connects two housing portions;
a flexible wiring member which connects the two housing portions such that they can communicate with each other; and
a receiving antenna which is connected to one of the two housing portions.

8. An electronic apparatus comprising:
two housing portions; and
the connecting device according to any one of claims 1 to 6 that foldably connects the two housing portions.

9. The electronic apparatus according to claim 7, further comprising;
a display unit that is provided in one of the two housing portions; and
an operating unit that is provided in the other housing portion,
wherein, when the two housing portions are in a folded state, the display unit and the operating unit are arranged opposite to each other.

10. The electronic apparatus according to claim 7,
wherein the bendable member has a curved shape in sectional view,
both ends of the bendable member in the longitudinal direction are fixed to leading ends of bosses provided on the two housing portions, and
the leading ends of the bosses have spherical shapes.

11. The electronic apparatus according to claim 7,
wherein the bendable member has a curved shape in sectional view,
both ends of the bendable member in the longitudinal direction are fixed to leading ends of bosses provided on the two housing portions, and
the leading ends of the bosses each have R portions opposite to each other.

12. A folding portable terminal apparatus comprising:
an upper housing portion which has a display unit provided therein;
a lower housing portion which has an operating unit provided therein; and
a connecting portion which foldably connects the upper housing portion and the lower housing portion,
wherein the connecting portion includes a plurality of connecting plates each having a curved portion that is curved on an axis parallel to a connecting direction thereof.

13. The folding portable terminal apparatus according to claim 12,
wherein the plurality of connecting plates overlap each other.

## Amended claims

### Amended claims under Art. 19.1 PCT

1. Amended) A connecting device comprising:
a bendable member which has enough restoring force and rigidity to restore a bent state to an unbent state and foldably connects two housing portions separated from each other by a predetermined distance,
wherein the bendable member is a thin plate having an arc shape'in sectional view.

2. A connecting device comprising:
a sheet-shaped member having flexibility on which two housing portions are fixed at a predetermined gap; and
a bendable member which has enough restoring force and rigidity to restore a bent state to an unbent state and is attached to the two housing portions so as to be overlapped with the sheet-shaped member.

3. (Canceled)

4. (Amended) The connecting device according to claims 1 and 2,
wherein the bendable member is attached to the two housing portions, with a concave portion thereof oriented in a direction where the two housing portions are folded.

5. (Amended) The connecting device according to any one of claims 2 and 4,
wherein the sheet-shaped member has a folding force generating means for generating folding force to hold the folded state of the housing portions at a substantially central region thereof corresponding to the gap between the two housing portions.

6. (Amended) The connecting device according to any one of claims 2, 4 and 5,
wherein the sheet-shaped member includes a stopper that is bent to temporarily hold the folded state of the two housing portions.

7. A connecting device comprising:
a connecting portion which foldably connects two housing portions;
a flexible wiring member which connects the two housing portions such that they can communicate with each other; and
a receiving antenna which is connected to one of the two housing portions.

8. (Amended) An electronic apparatus comprising:
two housing portions; and
the connecting device according to claim 1 and any one of claims 2 to 6 that foldably connects the two housing portions.

9. The electronic apparatus according to claim 7, further comprising;
a display unit that is provided in one of the two housing portions; and
an operating unit that is provided in the other housing portion,
wherein, when the two housing portions are in a folded state, the display unit and the operating unit are arranged opposite to each other.

10. The electronic apparatus according to claim 7,
wherein the bendable member has a curved shape in sectional view,
both ends of the bendable member in the longitudinal direction are fixed to leading ends of bosses provided on the two housing portions, and
the leading ends of the bosses have spherical shapes.

11. The electronic apparatus according to claim 7,
wherein the bendable member has a curved shape in sectional view,
both ends of the bendable member in the longitudinal direction are fixed to leading ends of bosses provided on the two housing portions, and
the leading ends of the bosses each have R portions opposite to each other.

12. A folding portable terminal apparatus comprising:
an upper housing portion which has a display unit provided therein;
a lower housing portion which has an operating unit provided therein; and
a connecting portion which foldably connects the upper housing portion and the lower housing portion,
wherein the connecting portion includes a plurality of connecting plates each having a curved portion that is curved on an axis parallel to a connecting direction thereof.

13. The folding portable terminal apparatus according to claim 12,
wherein the plurality of connecting plates overlap each other.
